(19) Europäisches Patentamt
European Patent Office
Office européen des brevets

(11) Veröffentlichungsnummer: **0 026 423**
**B1**

(12) **EUROPÄISCHE PATENTSCHRIFT**

(45) Veröffentlichungstag der Patentschrift: **15.06.83**

(51) Int. Cl.³: **C 14 C 9/02**

(21) Anmeldenummer: **80105682.1**

(22) Anmeldetag: **22.09.80**

(54) **Verfahren zur Fettung und Imprägnierung von Leder und Pelzen.**

(30) Priorität: **01.10.79 DE 2939741**

(43) Veröffentlichungstag der Anmeldung: **08.04.81 Patentblatt 81/14**

(45) Bekanntmachung des Hinweises auf die Patenterteilung: **15.06.83 Patentblatt 83/24**

(84) Benannte Vertragsstaaten: **AT BE CH DE FR GB IT LI NL SE**

(56) Entgegenhaltungen: **US-A-2 555 684**

**Die Akte enthält technische Angaben, die nach dem Eingang der Anmeldung eingereicht wurden und die nicht in dieser Patentschrift enthalten sind.**

(73) Patentinhaber: **Henkel Kommanditgesellschaft auf Aktien, Postfach 1100 Henkelstrasse 67, D-4000 Düsseldorf 1 (DE)**

(72) Erfinder: **Friese, Hans-Herbert, Dr., Krischerstrasse 79, D-4019 Monheim (DE)**
Erfinder: **Plapper, Jürgen, Dr., Kalstert 156, D-4010 Hilden (DE)**
Erfinder: **Ploog, Uwe, Dr., Haydnweg 6, D-5657 Haan /Rhld. (DE)**
Erfinder: **Ruscheinsky, Emil, Finkenweg 11, D-5090 Leverkusen 3 (DE)**

**EP 0 026 423 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

Verfahren zur Fettung und Imprägnierung von Leder und Pelzen

Bei der Herstellung und Behandlung von Leder und Pelzen spielen Emulgatoren eine wichtige Rolle. Einerseits dienen sie zur Emulgierung neutraler Fettungsmittel bei der Lickerfettung, andererseits üben sie selbst auch einen erheblichen Einfluß auf den Fettungseffekt aus (R. Heyden, Leder- und Häutemarkt 1962).

Am verbreitesten ist die Verwendung anionischer Emulgatoren, weil sie — besonders im sauren Bereich — weitgehend vom Leder gebunden werden und mit schwach polaren Lösungsmitteln nicht extrahierbar sind.

Trotz eines gewissen Bindevermögens an die Lederfaser führen Emulgatoren mit einer Sulfatgruppe im hydrophilen Teil des Moleküls z. B. Fettalkoholsulfate, jedoch zu einer verstärkten Wasserzügigkeit des Leders. Dies ist besonders bei Ober- und Bekleidungsleder unerwünscht, weil dadurch der Gebrauchswert vermindert wird. Außerdem zeigen derartige Sulfate eine nicht ausreichende Elektrolytbeständigkeit, so daß sie während der Chromgerbung nicht eingesetzt werden können. Dies ist offenbar auch bei den nicht-ethoxylierten Sulfaten entsprechend der US-A-2 555 684 der Fall, während die stärker hydrophilen, aber weniger stark adsorbierten Ethoxylierungsprodukte überraschenderweise ein besseres Ergebnis liefern.

Es wurde nun gefunden, daß bestimmte Fettsäurealkylolamidethersulfate bzw. -phosphate der in Anspruch 1 angegebenen Formel, wenn sie für sich alleine oder in Kombination mit üblichen Fettungsmitteln, in der Lickerflotte angewendet werden, das Wasserverhalten der damit behandelten Leder und Pelze in überraschender Weise erheblich verbessern. Besonders bevorzugt werden solche Verbindungen der in Anspruch 1 angegebenen Formel, bei denen R ein aliphatisches $C_{15}-C_{17}$-Radikal, $n = 2$ und $m = 2-3$ ist.

Die Herstellung der Fettsäurealkylolamidethersulfate kann nach allgemein bekannten Verfahren der Amidierung, Ethoxylierung, Sulfatierung und Neutralisation erfolgen (Reng, Quack, Seifen, Öle, Fette, Wachse 1976, S. 307), wobei man von Fettsäuren oder Fettsäuregemischen der Kettenlängen $C_{14}-C_{20}$, vorzugsweise $C_{16}-C_{18}$ ausgeht. Ein besonders geeignetes Fettsäuregemisch ist gehärtete $C_{16}-C_{18}$-Talgfettsäure.

Die Herstellung entsprechender Phosphate erfolgt zweckmäßig durch Umsetzen der Fettsäurealkylolamidether mit $P_2O_5$.

Die Fettsäurealkylolamidethersulfate bzw. -phosphate können für sich alleine in der Lickerfettung eingesetzt werden. Die Einsatzmenge beträgt etwa 0,1—10% Aktivsubstanz, bezogen auf Falzgewicht.

Die Fettsäurealkylolamidethersulfate können aufgrund ihrer Elektrolytbeständigkeit auch in der Chromgerbung eingesetzt werden. Die Einsatzmenge beträgt dann ca. 0—4% AS, bezogen auf Blößengewicht.

Man erhält Leder von hoher Weichheit und verbessertem Wasserverhalten, d. h. geringere Wasserzügigkeit. Die Leder weisen eine sehr gute Farbqualität auf.

Vorzugsweise werden die Fettsäurealkylolamidethersulfate bzw. -phosphate in Kombination mit üblichen Fettungsmitteln, z. B. Neutralölen auf nativer oder synthetischer Basis, Paraffinölen, Wachsen, Sulfierungsprodukten von Fettsäureestern, sowie deren Chlorierungsprodukten angewendet. Auch in diesem Falle werden Weichheit, Wasserverhalten und Farbegalität verbessert.

## Beispiel 1

### Rindoberleder

In üblicher Weise, jedoch ohne Emulgatorzusätze geäscherte, entkälkte, gebeizte und gepickelte Rindblößen werden chromgegerbt und erhalten eine Nachgerbung mit

4% eines basischen Chromsalzes
1% eines synthetischen Gerbstoffs auf Basis Phenolkondensationsprodukt
1% eines Harzgerbstoffes auf Basis Polyacrylat.

Die Färbung erfolgt in bekannter Weise mit 1% eines sauren Farbstoffes. Die Fettung wird in neuer Flotte nach folgender Arbeitsweise durchgeführt:

| | |
|---|---|
| 50% | Wasser 60° C |
| 6% | Fettsäure-$C_{16}-C_{18}$-ethanolamid-2-EO-sulfat-Na als fettende Substanz (Fettung A) |
| 45 Min. | laufen lassen |
| 1% | Ameisensäure |
| 15 Min. | laufen lassen. |

Die Prozentangaben beziehen sich auf wet-blue-Gewicht.

Nach üblicher Fertigstellung erreicht man weiche Leder, die einen verzögerten Wasserdurchtritt und eine geringere Wasseraufnahme gegenüber einer gleichartigen Behandlung, jedoch mit 6% Fettalkohol-$C_{16}-C_{18}$-2-EO-sulfat als fettende Substanz (Fettung B), aufweisen.

| | Fettung A | Fettung B |
|---|---|---|
| Wasserdurchtritt | | |
| Penetrometer, 10% Stauchung | 40 Min. | 2 Min. |
| Wasseraufnahme | | |
| dynamisch nach 3 h | 24% | 93% |
| statisch nach 24 h | 72% | 105% |

Ein ähnliches Ergebnis wird erzielt, wenn man als fettende Substanz Fettsäure-$C_{16}-C_{18}$-ethanolamid-2-EO-phosphat-Na einsetzt.

Beispiel 2

Imprägnierte Rindoberleder

In üblicher Weise, jedoch ohne Emulgatorzusätze geäscherte, entkälkte, gebeizte und gepickelte Rindblößen werden chromgegerbt und erhalten eine Nachgerbung mit

4% eines basischen Chromsalzes,
1% eines Na-Salzes einer Dicarbonsäure, z. B. Adipinsäure
1% Glutaraldehyd

Die Färbung erfolgt in bekannter Weise mit 1% eines sauren Farbstoffes. Die Fettung wird in neuer Flotte nach folgender Arbeitsweise durchgeführt:

| | |
|---|---|
| 50% | Wasser 60° C |
| 7% | sulfoxidierter Paraffingatsch |
| 0,4% | Fettsäure-$C_{16}-C_{18}$-ethanolamid-2-EO-sulfat-Na |
| 30 Min. | laufen lassen |
| 0,5% | Ameisensäure |
| 2% | basisches Chromsalz |
| 60 Min. | laufen lassen |
| 15 Min. | laufen lassen und gut spülen. |

Die Prozentangaben beziehen sich auf wet-blue-Gewicht.

Nach üblicher Fertigstellung erhält man Leder, die einen sehr weichen Griff und ein ausgezeichnetes Wasserverhalten aufweisen.

| | |
|---|---|
| Wasserdurchtritt | |
| Penetrometer, 5% Stauchung | 7 h |
| Wasseraufnahme | |
| dynamisch 3 h | 14% |

Beispiel 3

Rindveloursspalte für Oberleder

In üblicher Weise, jedoch ohne Emulgatorzusätze geäscherte, entkälkte, gebeizte und gepickelte Rindblößen werden chromgegerbt. Nach dem Spalten wird eine Nachgerbung in bekannter Weise mit 5% eines synthetischen Gerbstoffes auf Basis eines Phenolkondensationsproduktes durchgeführt. Die Fettung erfolgt in neuer Flotte nach folgender Arbeitsweise:

| | |
|---|---|
| 50% | Wasser 60° C |
| 6% | fettende Substanz, bestehend aus |
| | 1 Teil Fettsäure-$C_{18}$-ethanolamid-3-EO-sulfat-Na |
| | 2 Teile Weichparaffin |
| 30 Min. | laufen lassen |
| 0,5% | Ameisensäure |
| 15 Min. | laufen lassen |

Die Prozentangaben beziehen sich auf Spaltgewicht.

Die erhaltenen Leder werden getrocknet, geschliffen und in üblicher Weise gefärbt.

Man erhält sehr weiche Leder mit gutem Wasserverhalten. Der Wasserdurchtritt ist verzögert und die Wasseraufnahme vermindert.

| | |
|---|---|
| Wasserdurchtritt | |
| Penetrometer, 10% Stauchung | 137 Min. |
| Wasseraufnahme | |
| dynamisch nach 3 h | 23% |

Ähnliche Ergebnisse werden erhalten, wenn man als fettende Substanz Fettsäure-$C_{18}$-ethanolamid-3-EO-phosphat-Na einsetzt.

## Beispiel 4

### Möbelleder

In üblicher Weise, jedoch ohne Emulgatorzusätze geäscherte, entkälkte und gebeizte Rindblößen werden nach folgender Arbeitsweise gepickelt, vorgefettet und chromgegerbt:

| | |
|---|---|
| 100% | Wasser 22° C |
| 7% | Salz |
| 10 Min. | laufen lassen |
| 0,7% | Schwefelsäure (96%ig) |
| 0,7% | Ameisensäure |
| 2 h | laufen lassen, pH-Wert 3,5 im Blößenquerschnitt |
| 2,0% | fettende Substanz, bestehend aus |
| | 1 Teil Fettsäure $C_{16}$—$C_{18}$-ethanolamid-2-EO-sulfat-Na |
| | 9 Teile sulfitiertes Gemisch aus Wollfett und Tran (1 : 1) |
| 30 Min. | laufen lassen |
| 8% | eines basischen Chromsalzes |
| 0,6% | Magnesiumoxid |
| 5 h | laufen lassen |

Alle Prozentangaben beziehen sich auf Blößengewicht.

Nach üblicher Fertigstellung erhält man tuchartig weiche Leder mit hoher Reißfestigkeit, die nicht die durch die übliche Fettung während der Gerbung bedingte Wasserzügigkeit aufweisen. Eine Nachimprägnierung, z. B. mit Chromstearat, ist möglich.

## Beispiel 5

### Pelzvelour

Schaffelle werden in üblicher Weise geweicht, gewaschen und gepickelt. Die weitere Bearbeitung erfolgt nach folgender Arbeitsweise:

Flottenlänge 1 : 20

| | |
|---|---|
| 40 g/l | Salz |
| 5 Min. | laufen lassen |
| 7 g/l | basisches Chromsalz |
| 1 h | laufen lassen |
| 2,5 g/l | fettende Substanz, bestehend aus |
| | 1 Teil Fettsäure-$C_{16}$—$C_{18}$-ethanolamid-2-EO-sulfat-Na |
| | 1 Teil eines sulfitierten Gemisches aus Fettsäuremethylester und Tran (1 : 1) |
| | 1 Teil eines Gemisches aus Wollfett und sulfitiertem Tran (1 : 4), |

| | |
|---|---|
| 1 h | laufen lassen |
| 7 g/l | basisches Chromsalz |
| 10 h | laufen lassen und abstumpfen mit 1,5 g/l Natriumbicarbonat auf pH 4,0. |

Nach üblicher Fertigstellung werden sehr weiche Pelzvelours von guter Zügigkeit und Schmalzigkeit erhalten. Die Wasserzügigkeit ist gegenüber üblichen Pelzvelours vermindert.

### Beispiel 6

### Herstellung von Fettsäureethanolamidethersulfaten

308,2 g (1 Mol) Kokosfettsäuremonoethanolamid-2-EO (OHZ: 182) werden in einem Dreihalskolben mit Rührer, Thermometer, Stickstoffeinleitung und Tropftrichter auf 40—45° C erwärmt und bei dieser Temperatur mit 116,5 g (1 Mol) Chlorsulfonsäure zur Umsetzung gebracht; Dauer ca. 45 Minuten. Man läßt noch ca. 20 Minuten nachreagieren und gießt den Schwefelsäurehalbester bei ca. 45° C in kleinen Portionen unter Rühren in eine Lösung von 40 g Natronlauge in 600 ml destilliertes Wasser.

Man erhält eine stark schäumende, viskose Lösung des gewünschten Amidethersulfats: Ausbeute 1028 g

| | |
|---|---|
| $NaSO_3$-H (n. Epton) | 6,38% |
| d. h. Aktivsubstanz (MG 410,2) | 25,7% |

### Beispiel 7

### Herstellung von Fettsäureethanolamidethersulfaten

444 g (1 Mol) Kokosfettsäuremonoethanolamid-4-EO wurden analog mit 116,2 g (1 Mol) Chlorsulfonsäure sulfatiert und mit 72 g Natronlauge in 805 g Wasser neutralisiert.

Ausbeute: 1367 g einer gelben, viskosen Flüssigkeit

| | |
|---|---|
| $NaSO_3$-H (n. Epton) | 4,95% |
| d. h. AS (MG 546) | 26,5% |
| Alkoholextrakt | 40,0% |
| Wassergehalt | 55,0% |

### Beispiel 8

### Herstellung von Fettsäureethanolamidetherphosphaten

308,2 g (1 Mol) Kokosfettsäuremonoethanolamid-2-EO (OHZ: 182) wurden in einem Dreihalskolben mit Rührer, Thermometer und Stickstoffeinleitung auf ca. 65° C erwärmt und bei dieser Temperatur mit 71 g Phosphorpentoxid in kleinen Portionen zur Umsetzung gebracht. Dann heizt man auf 85—90° C auf und hält diese Temperatur 3 Stunden. Man löst 40 g Natronlauge in 728 g Wasser und gibt langsam den sauren Ester hinzu.

Ausbeute: 1180 g einer weichen gelben Paste

| | |
|---|---|
| Alkoholextrakt | 34,6% |
| Wassergehalt | 63,1% |

### Beispiel 9

### Herstellung von Fettsäureethanolamidetherphosphaten

374 g (1 Mol) Talgfettsäuremonothanolamid-2-EO (OHZ: 150) wurden analog zu Beispiel 8 mit 71 g Phosphorpentoxid umgesetzt und das Reaktionsprodukt mit 40 g Natronlauge in 850 g Wasser neutralisiert.

Ausbeute: 1337 g einer festen gelben Paste

| | |
|---|---|
| Alkoholextrakt | 30,6% |
| Alkoholunlösliches | 5,4% |
| Wasser | 61,6% |

**Patentansprüche**

1. Verfahren zur Fettung und Imprägnierung von Leder und Pelzen, dadurch gekennzeichnet, daß man in der Lickerflotte ein Fettsäurealkylolamidethersulfat oder -phosphat der Formel

$$R-CO-NH(CH_2)_n(O-CH_2-CH_2)_mX^{(-)}\,Y^{(+)}$$

worin

$R$ = ein aliphatisches $C_{13}-C_{19}$-Radikal,
$n$ = 2—4,
$m$ = 2—4
$X^{(-)}$ = eine Sulfat- oder Phosphatgruppe
$Y^{(+)}$ = $Na^{(+)}$, $K^{(+)}$, $NH_4^{(+)}$

ist, anwendet.

2. Verfahren nach Anspruch 1, dadurch gekennzeichnet, daß man in der Lickerflotte ein Fettsäureethanolamidethersulfat oder -phosphat der in Anspruch 1 angegebenen Formel anwendet,

worin

$R$ = ein aliphatisches $C_{15}-C_{17}$-Radikal,
$n$ = 2
$m$ = 2—3

ist, und die Symbole $X^{(-)}$ und $Y^{(+)}$ die angegebene Bedeutung behalten.

3. Verfahren nach Ansprüchen 1 oder 2, dadurch gekennzeichnet, daß man das Fettsäurealkylolamidethersulfat oder -phosphat in einer Menge von 0,1—10%, bezogen auf Falzgewicht, einsetzt.

4. Verfahren nach Ansprüchen 1 bis 3, dadurch gekennzeichnet, daß man das Fettsäurealkylolamidethersulfat in Kombination mit üblichen Fettungsmitteln, wie Neutralölen auf nativer oder synthetischer Basis, Paraffinölen, Wachsen, Sulfierungsprodukten von Fettsäureestern, sowie derenChlorierungsprodukten, einsetzt.

**Claims**

1. A process for dubbing and impregnating leather and skins, characterised in that a fatty acid alkylol amide ether sulfate or phosphate corresponding to the following formula

$$R-CO-NH(CH_2)_n(O-CH_2-CH_2)_mX^{(-)}Y^{(+)}$$

in which

$R$ = an aliphatic $C_{13}-C_{19}$-radical,
$n$ = 2—4,
$m$ = 2—4,
$X^{(-)}$ = a sulfate orphosphate group
$Y^{(+)}$ = $Na^{(+)}$, $K^{(+)}$, $NH_4^{(+)}$,

is used in the fat-liquoring bath.

2. A process as claimed in Claim 1, characterised in that a fatty acid ethanolamide ether sulfate or phosphate corresponding to the formula in Claim 1 in which

$R$ = an aliphatic $C_{15}-C_{17}$-radical,
$n$ = 2,
$m$ = 2—3 and

the symbols $X^{(-)}$ and $Y^{(+)}$ are as already defined is used in the fat-liquoring bath.

3. A process as claimed in Claim 1 or 2, characterised in that the fatty acid alkylolamide ether sulfate or phosphate is used in a quantity of from 0.1 to 10%, based on the weight of the skin.

4. A process as claimed in Claims 1 to 3, characterised in that the fatty acid alkylol amide ether sulfate is used in combination with standard dubbing agents, such as neutral oils of the natural or synthetic type, paraffin oils, waxes, sulfonation products of fatty acid esters and also their chlorination products.

**Revendications**

1. Procédé de graissage et d'imprégnation des cuirs des fourrures, caractérisé en ce qu'on utilise dans le bain de graissage un sulfate ou phosphate d'alcoylolamide-éther d'alcoylolamide-éther d'acide gras de formule:

$$R-CO-NH(CH_2)_n(O-CH_2-CH_2)_m X^{(-)}Y^{(+)}$$

dans laquelle

R = radical aliphatique en $C_{13}-C_{19}$,
n = 2—4,
m = 2—4,
$X^{(-)}$ = groupe sulfate ou phosphate
$Y^{(+)}$ = $Na^{(+)}$, $K^{(+)}$, $NH_4^{(+)}$.

2. Procédé selon la revendication 1, caractérisé en ce que dans le bain de graissage on utilise un sulfate ou phosphate d'éthanolamide-éther d'acide gras de formule donnée à la revendication 1 où

R = radical aliphatique en $C_{15}-C_{17}$,
n = 2
m = 2—3

et en ce que les symboles $X^{(-)}$ et $Y^{(+)}$ conservent la signification indiquée.

3. Procédé selon la revendication 1 ou 2, caractérisé en ce qu'on utilise un sulfate ou phosphate d'alcoylolamide-éther d'acide gras en une quantité de 0,1—10% par rapport au poids au planage.

4. Procédé selon les revendications 1 à 3, caractérisé en ce qu'on utilise le sulfate d'alcoylolamide-éther d'acide gras en combinaison avec des agents de graissage usuels, comme des huiles neutres d'origine naturelle ou synthétique, des huiles de paraffines, des cires, des produits de sulfonation d'esters d'acides gras de même que leurs produits de chloruration.